# EUROPEAN PATENT APPLICATION

(11) **EP 3 165 508 A1**
(43) Date of publication of application: **10.05.2017**
(21) Application number: 15815108.4
(22) Date of filing: 03.07.2015
(51) Int. Cl.: C01B 33/035

(54) **SILICON CORE WIRE FOR PRODUCING POLYCRYSTALLINE SILICON ROD, AND DEVICE FOR PRODUCING POLYCRYSTALLINE SILICON ROD**

(30) Priority: 04.07.2014 JP 2014138941
(71) Applicant: Shin-Etsu Chemical Co., Ltd., Tokyo 100-0004 (JP)
(72) Inventor: TANAKA, Shuji, Joetsu-shi Niigata 942-8601 (JP); OKADA, Tetsuro, Joetsu-shi Niigata 942-8601 (JP)
(74) Representative: Smaggasgale, Gillian Helen
(86) International application number: PCT/JP2015/003366
(87) International publication number: WO 2016/002232

(57) **Abstract**

A core wire holder 34 (holding member) has a taper of a positive taper angle on the lower end part thereof. On the other hand, in an adaptor 33 (supporting member) to be used for connection of a metal electrode 30 with the core wire holder 34 (holding member) for energization of a silicon core wire 100, the inner surface of a hole of the adaptor 33 into which the lower end part of the core wire holder 34 (holding member) is inserted, when the opening side of the hole is set upward and the insertion direction of the lower end part of the holding member is set downward, has a taper of a positive taper angle. The lower end part of the core wire holder 34 (holding member) is inserted in the hole of the adaptor 33 (supporting member) and the silicon core wire 100 is thus fixed.

## Description

### Technical Field

The present invention relates to a technology of producing a polycrystalline silicon rod, and particularly to a technology of making possible the stable production of the polycrystalline silicon rod by preventing failure, falling and the like of a silicon core wire when a polycrystalline silicon is deposited on the silicon core wire by a CVD reaction.

### Background Art

As production methods of polycrystalline silicons to become raw materials of single-crystal silicon substrates for semiconductor production and silicon substrates for solar cell production, there are known the Siemens process and the Union Carbide process.

Needless to say, the Siemens process is a process in which a raw material gas containing a chlorosilane is contacted with a heated silicon core wire (silicon starter filament) to thereby cause a polycrystalline silicon to vapor-phase grow on a surface of the silicon core wire by a CVD reaction.

The Union Carbide process is a process in which a gas (substantially chlorine-free gas) containing monosilane is used as a raw material, and as in the Siemens process, is contacted with a heated silicon core wire to thereby cause a polycrystalline silicon to vapor-phase grow on a surface of the silicon core wire by a CVD reaction (for example, see Japanese Patent Laid-Open No. 2010-269994 (Patent Literature 1)).

In recent years, there have been made attempts of reducing the production cost of polycrystalline silicons by enlarging the diameter of polycrystalline silicon rods and raising the deposition rate of polycrystalline silicons. In order to raise the deposition rate of a polycrystalline silicon, it is necessary that a "boundary film" formed on the growing layer surface of the polycrystalline silicon is made remarkably thin, and the deposition reaction temperature is made high. Here, the "boundary film" refers to an ultrathin zone where a raw material gas flows in the laminar flow state on the surface of a polycrystalline silicon rod.

In the case where a raw material gas is supplied into a reaction furnace so as to meet a high-rate growing condition, the kinetic energy of the gas has to be inevitably made to be high. Also with the situation that the diameter of a silicon core wire is only several millimeters, under the high-rate growing condition, there is liable to be broken the connection portion of the silicon core wire with a graphite chuck being a holding member for the end part of the reverse U-shape silicon core wire.

Further since for the energization for heating the silicon core wire to 700 to 1,200°C, a voltage of several thousand volts is applied, there are liable to be generated sparks and the like at the connection portion (contact portion) of the silicon core wire with its holding member (graphite chuck), and the connection portion (contact portion) of a metal electrode for energizing the silicon core wire with a supporting member to be used for connection with the holding member. This becomes more remarkable when there are larger the difference in specific resistance and the contact resistance between the silicon core wire and the holding member, and the holding member and the supporting member.

When sparks and the like are thus generated, the silicon core wire is locally fused, undergoes structural damage, and otherwise, whereby the mutual connection strength remarkably decreases and in the worst case, the silicon core wire falls, failures or otherwise in the early stage of the deposition reaction.

When such failure, falling and breakage on the silicon core wire are generated, since the deposition reaction of the polycrystalline silicon thereafter becomes impossible, various methods have been proposed in order to prevent such trouble.

Japanese Patent Laid-Open No. 2009-256191 (Patent Literature 2) discloses an invention of a polycrystalline silicon reaction furnace which is "a polycrystalline silicon reaction furnace in which a polycrystalline silicon deposited on the surface of an electrode holding a silicon core rod supports the own weight of the rod and can be prevented from peeling down off the silicon core rod", and "the polycrystalline silicon reaction furnace in which the silicon core rod provided in the furnace is energized and heated, and a raw material gas supplied in the furnace is caused to react to thereby form a polycrystalline silicon on the surface of the silicon core rod, wherein a bottom plate part of the furnace is equipped with electrode holders installed in an electrically insulating state to the bottom plate part, and core rod holding electrodes each connected to the electrode holder and upward holding the silicon core rod, and an uneven part exposed to the furnace interior atmosphere is installed on the outer peripheral surface of the core rod holding electrodes each; and the Patent Literature 2 contends that a configuration such that "the upper end part of the core rod holding electrode is provided with a tapered part upward reducing its diameter, and the taper angle of the tapered part is 70° or larger and 130° or smaller" brings about that "while the core rod holding electrode can be held at a high temperature, and the deposition of the polycrystalline silicon is made easy on the entire area of the outer peripheral side surface of the core rod holding electrode, since the inclination is not made to be a steeper inclination than needed, the polycrystalline silicon deposited on the tapered part never peels off".

Japanese Patent Laid-Open No. 2010-235438 (Patent Literature 3) is an invention having "an object to provide a polycrystalline silicon production device capable of producing a silicon product excellent in workability and quality", and discloses "the polycrystalline silicon production device in which a polycrystalline silicon is deposited on the surface of silicon core rods by contacting a raw material gas with the silicon core rods heated and extending upward and downward in a reaction furnace, and which has a constitution such that: there are equipped core bar holding parts each having a holding hole into which the lower end part of the silicon core rod is inserted and being composed of an electroconductive material; in the core rod holding parts each, the holding hole has a shape whose cross-section along in the horizontal direction has a plurality of corners; threaded holes communicating with the outside surface of the core rod holding part are formed at the two or more corners; and a fixing screw to fix the silicon core rod is screwed to at least any one of the threaded holes", and the Patent Literature 3 contends that "according to the present invention, in the case where the deflection of a pair of the silicon core rods is not sufficiently corrected even if a coupling member is attached, in the case where the holding hole for the silicon core rod causes a positional shift, an inclination and the like, and otherwise, by changing the threaded hole to which the fixing screw is to be screwed, depending on the dimensional difference between the silicon core rod and the holding hole, the installation position and attitude of the silicon core rod can be regulated. Therefore, the deflection of the pair of the silicon core rods coupled by means of the coupling member can be corrected by a simple work of changing the screwing position of the fixing screw".

Japanese Patent Laid-Open No. 2010-235440 (Patent Literature 4) discloses an invention, in consideration of the situation that it is demanded that "a silicon seed be efficiently heated by making low the electric resistance between holding parts and silicon core rods", having "an object of providing a polycrystalline silicon production device capable of producing a high-quality silicon product by efficiently heating the silicon seed", "the polycrystalline silicon production device being one in which a polycrystalline silicon is deposited on the surface of the silicon core rods by contacting a raw material gas with the silicon core rods heated and extending upward and downward in a reaction furnace, and which has a structure such that: there are equipped core bar holding parts each having a holding hole into which the lower end part of the silicon core rod is inserted and being composed of an electroconductive material; the silicon core rods are shaped in a polygonal shape in cross-section; in the core rod holding parts each, the holding hole has a cross-section, which the silicon core rod cross upward and downward, of a polygon corresponding to the silicon core rod; a threaded hole communicating with the outside surface of the core rod holding part is formed; and a fixing screw to press the side surface of the silicon core rod to the inner surface of the holding hole is screwed to the threaded hole", and the Patent Literature 4 contends that "according to the present invention, since the side surface of the silicon core rod surface-contacts the inner surface of the holding hole of the core bar holding part, the electric resistance between the silicon core rod and the core rod holding part is low, and the electric power can efficiently be supplied to the silicon core rod".

The inventions disclosed in the above Patent Literatures 2 to 4, however, have the following drawbacks: the structure of the holding member (graphite chuck) is complex and the time required for setting work is long, and also slight loosening, offset excessive fastening and the like of the screw to fix the holding member make a locally excessive current to flow and bring about easy generation of sparks.

Japanese Patent Laid-Open No. 2011-195438 (Patent Literature 5) discloses an invention having an object of "providing an electrode remarkably reduced in the falling probability as compared with electrodes having conventional structural forms", "the electrode being an electrode having a circular cone-shaped or pyramid-shaped front end part and being composed of carbon, and being characterized in that the electrode has means to accommodate a filament rod, and the side surface of the circular cone-shaped or pyramid-shaped front end part is surrounded by at least one raised edge part".

The electrode disclosed in Patent Literature 5, however, cannot help becoming expensive because of the complexity of the electrode shape, and additionally, the Patent Literature 5 makes no reference to how a contact portion of the electrode with the filament rod is devised, which is most important for prevention of falling and the like in the early deposition period of a polycrystalline silicon.

Japanese Patent Laid-Open No. 2011-195439 (Patent Literature 6) discloses an invention having an object of "providing an electrode remarkably reduced in the falling probability as compared with electrodes having conventional structural forms", the electrode being composed of carbon, and "the electrode being characterized in that the electrode is composed of at least two different zones having different specific thermal conductivities; an outer-side zone (A) forms a base part of the electrode, and supports one or a plurality of inner-side zones; and the upper part of an innermost-side zone (B) protrudes from the zone (A), and has a lower specific thermal conductivity than the zone (A)".

Then, Patent Literature 6 contends that "at the beginning of the growth and hence when the rod diameter is small, the rod foot part first grows only onto the inserting part having the lower thermal conductivity. Since the employed graphite has a low specific thermal conductivity, the heat dissipation through the inserting portion (zone B) becomes low; at the beginning of the growth, little heat is dissipated through the entire electrode and the electrode holding part thereof; and even in the case where the rod diameter is still small, a high temperature is attained at the connection portion of the electrode to the silicon rod. Cold zones at the rod foot, at which zones etching processes can occur due to an excessively low temperature, are not present. Thereby, the rod foot part is united with the electrode front end part in the zone (B) rapidly and without defects. Thereby, the falling in the case where the rod diameter is small before and during the deposition process is completely prevented".

The electrode disclosed in Patent Literature 6, however, since being composed of the zones having different specific thermal conductivities, cannot help having a complex shape; and the Patent Literature 6, as in Patent Literature 5, makes no reference to how a contact portion of the electrode with the filament rod is devised, which is most important for prevention of falling and the like in the early deposition period of a polycrystalline silicon.

Japanese Patent No. 2671235 (Patent Literature 7) discloses "a graphite-made chuck being suitable for installing a long-size starter filament when a polycrystalline silicon rod is produced by thermally decomposing a gaseous silicon compound on the starter filament, and being characterized by having a hydrogen-impervious outer coating layer", and the graphite-made chuck "being characterized in that the graphite-made chuck has a lower-side groove suitable for installing the graphite-made chuck on an electrode to supply a current to heat the starter filament".

The chuck structure disclosed in the Patent Literature 7, however, has a high contact resistance between a groove provided at the front end part of the graphite-made chuck having its circularly conical-shaped upper part and the starter filament, and exhibits very high possibilities in failure and falling.

Japanese Patent No. 3909242 (Patent Literature 8) discloses an invention of a device for depositing a semiconductor material, "the device being attained by being configured such that there are provided a current passage conductive to and fixed to a baseplate of the deposition device, and an electrode holder; the electrode holder has a lower-side surface disposed above the current passage and an upper-side surface connected to a carbon electrode; and a support body can be inserted into the carbon electrode, and the device being characterized in that the carbon electrode has a thermal conductivity larger than 145 W/m·K, and has a thermal expansion coefficient matching to that of silicon".

The Patent Literature 8 further contends that according to the invention, "tests have shown that in many cases, breakage of the rod foot leads to inclination and falling of the polysilicon rod; the occurrence of the breakage of the rod foot part can remarkably be reduced only by exchanging common carbon electrodes for the carbon electrode having the above-mentioned material properties; and the inclination and falling of the polycrystalline silicon rod due to the burst rod foot part can be prevented by the device according to the present invention".

Also the Patent Literature 8, however, makes no reference to how the contact portion of the filament rod with the electrode is devised, which is most important for prevention of falling and the like in the early deposition period of a polycrystalline silicon.

National Publication of International Patent Application No. 2012-521950 (Patent Literature 9) discloses an invention of a contact-type clamping device having a constitution such that "particularly in a silicon deposition reactor, the contact-type clamping device is equipped with a rod holder incorporating and electrically contacting a thin silicon rod and supporting one end part of the thin silicon rod; the rod holder is equipped with at least three contact elements disposed around a supporting space to support the thin silicon rod; the each contact element forms a contact surface facing the support space direction so as to electrically and mechanically contact the thin silicon rod; and the contact surfaces of the adjacent contact elements are spaced from each other".

The clamping device disclosed in the Patent Literature 9, however, since having a complex clamping structure, cannot help being expensive.

National Publication of International Patent Application No. 2014-504582 (Patent Literature 10) discloses an invention of "a chuck equipped with a first section equipped with a well and a filament channel, and a second section having an electrode channel", "the chuck having the well to support a rod fabricated during chemical deposition", and having a constitution such that "the well is demarcated by a plurality of slats extending in the circumference direction from the bottom part surface of the well to one end part of the first section"; and "the plurality of slats are separated from each other by a window, and the each window extends, at least partially, along the length of the adjacent slat".

The chuck structure disclosed in the Patent Literature 10, however, gives no consideration to shaking of the supported silicon core wire (filament) in the furnace, and is conceivably not suitable for production of polycrystalline silicon rods, whose diameters are being enlarged.

### Citation List

### Patent Literature

Patent Literature 1: Japanese Patent Laid-Open No. 2010-269994
Patent Literature 2: Japanese Patent Laid-Open No. 2009-256191
Patent Literature 3: Japanese Patent Laid-Open No. 2010-235438
Patent Literature 4: Japanese Patent Laid-Open No. 2010-235440
Patent Literature 5: Japanese Patent Laid-Open No. 2011-195438
Patent Literature 6: Japanese Patent Laid-Open No. 2011-195439
Patent Literature 7: Japanese Patent No. 2671235
Patent Literature 8: Japanese Patent No. 3903242
Patent Literature 9: National Publication of International Patent Application No. 2012-521950
Patent Literature 10: National Publication of International Patent Application No. 2014-504582

### Summary of Invention

### Technical Problem

As described hitherto, it is the real situation that any of the conventional technologies cannot afford to sufficiently meet requirements for recent year's diameter enlargement of polycrystalline silicon rods and high-rate deposition (for example, 13 µm/min or higher) of polycrystalline silicons.

The present invention has been achieved in consideration of such problems, and the object thereof is to provide a technology of contributing to the stable production of a polycrystalline silicon by preventing local fusion of and structural damage to a silicon core wire due to generation of sparks and the like, particularly preventing falling and failure of the silicon core wire in the early stage of the deposition reaction, when the polycrystalline silicon is deposited on the silicon core wire by a CVD method.

### Solution to Problem

In order to solve the above-mentioned problems, the silicon core wire according to the present invention is a silicon core wire to become a seed for depositing a polycrystalline silicon by a CVD reaction, and has a tapered part having a positive taper angle on the end part thereof which is to be inserted in a holding member provided in a reaction furnace.

Preferably, the taper of the tapered part is 1/100 (taper angle: 0.5729°) or larger and 1/10 (taper angle: 5.725°) or smaller; more preferably, 1/80 (taper angle: 0.7162°) or larger and 1/20 (taper angle: 2.864°) or smaller; and still more preferably, 1/60 (taper angle: 0.9548°) or larger and 1/35 (taper angle: 1.6366°) or smaller.

Meanwhile, preferably, the taper length of the tapered part is 20 mm or longer and 100 mm or shorter; more preferably, 20 mm or longer and 80 mm or shorter; and still more preferably, 20 mm or longer and 60 mm or shorter.

The device for producing a polycrystalline silicon rod according to the present invention is equipped with the holding member of the silicon core wire to become a seed for depositing a polycrystalline silicon by a CVD reaction; and in the holding member, the inner surface of a hole into which the end part of the silicon core wire is inserted, when the opening side of the hole is set upward and the insertion direction of the end part of the silicon core wire is set downward, has a taper of a positive taper angle.

As in the above, preferably, the taper of the tapered part is 1/100 (taper angle: 0.5729°) or larger and 1/10 (taper angle: 5.725°) or smaller; more preferably, 1/80 (taper angle: 0.7162°) or larger and 1/20 (taper angle: 2.864°) or smaller; and still more preferably, 1/60 (taper angle: 0.9548°) or larger and 1/35 (taper angle: 1.6366°) or smaller.

Further as in the above, preferably, the taper length of the tapered part is 20 mm or longer and 100 mm or shorter; more preferably, 20 mm or longer and 80 mm or shorter; and still more preferably, 20 mm or longer and 60 mm or shorter.

The above-mentioned device for producing a polycrystalline silicon rod is equipped with a metal electrode for energizing the silicon core wire and a supporting member to be used for connection with the holding member; and the holding member and the supporting member may have forms such that the lower end part of the holding member has a taper of a positive taper angle, and the inner surface of a hole of the supporting member into which the lower end part of the holding member is inserted, when the opening side of the hole is set upward and the insertion direction of the lower end part of the holding member is set downward, has a taper of a positive taper angle.

The above-mentioned device for producing a polycrystalline silicon rod is equipped with a metal electrode for energizing the silicon core wire and a supporting member to be used for connection with the holding member, and the holding member and the supporting member may also have forms such that: the inner surface of a depressed part which is provided on the lower end part of the holding member, when the opening side of the depressed part is set downward, has a taper of a positive taper angle; and the supporting member has a raised part to receive the depressed part of the holding member, and the surface of the raised part has a taper of a positive taper angle.

Preferably, at least one of the holding member and the supporting member is composed of a graphite.

### Advantageous Effects of Invention

In the present invention, the design is so made that contact portions of the silicon core wire and the holding member to hold the end part of the silicon core wire have tapers. In such an accommodation state, the holding results in being carried out not by fixation by an external force with a screw or the like but by the own weight of the silicon core wire. Consequently, even in the case where the difference in specific resistance between materials of the silicon core wire and the holding member is large, the substantial contact resistance difference becomes low, and generation of sparks and the like when the polycrystalline silicon is deposited is suppressed and falling and failure of the silicon core wire is prevented.

### Brief Description of Drawings

[Figure 1]Figure 1(A) is a view illustrating an example of the silicon core wire according to the present invention; and Figure 1(B) is an enlarged view of a tapered part.
[Figure 2]Figure 2 is a schematic explanatory view illustrating one example of a constitution of a reaction furnace which is the production device of a polycrystalline silicon rod according to the present invention.
[Figure 3]Figure 3(A) is a view of one form example of a core wire holder to hold a silicon core wire and an adaptor mounting the core wire holder; and Figure 3(B) is a view illustrating a situation where the end part of the silicon core wire is about to be inserted in the core wire holder.
[Figure 4]Figure 4(A) is another form example of a core wire holder to hold a silicon core wire and an adaptor mounting the core wire holder; and Figure 4(B) is a view illustrating a situation where the end part of the silicon core wire is about to be inserted in the core wire holder.

### Description of Embodiments

Hereinafter, the silicon core wire and the device for producing a polycrystalline silicon rod according to the present invention will be described by reference to the drawings.

The present inventors have acquired a finding that providing connection portions of a silicon core wire and a member to hold the end part thereof with proper gradients is effective to prevent local fusion of and structural damage to the silicon core wire due to generation of sparks and the like when a polycrystalline silicon is deposited on the silicon core wire by a CVD method.

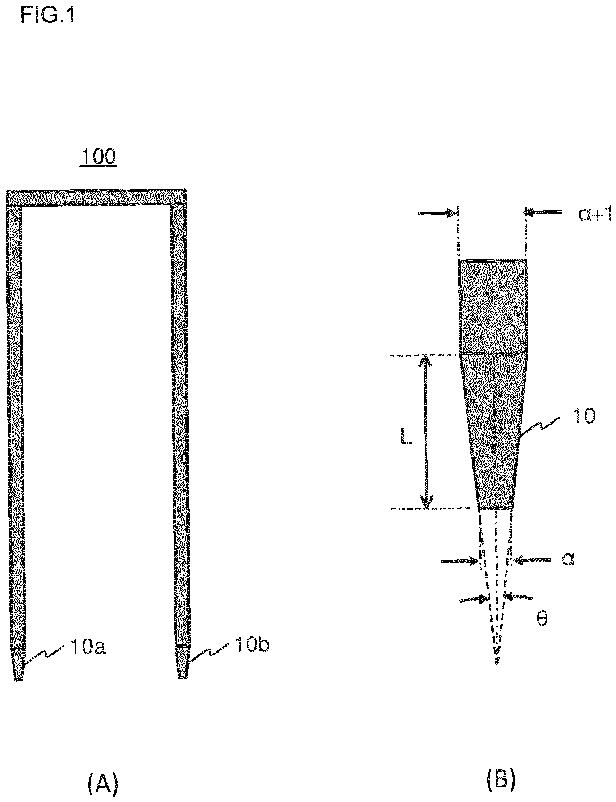

Figure 1(A) is a view illustrating an example of the silicon core wire according to the present invention; and the silicon core wire 100 has a reverse U shape, and both its end parts have tapered parts (10a, 10b) having a positive taper angle.

Figure 1(B) is an enlarged view of the tapered part 10; and the taper length of the tapered part is L, and the taper angle is θ; and the taper is defined by [(α+1)-α]/L (=1/L). The taper of the tapered part 10 is set at preferably 1/100 (taper angle θ = 0.5729°) or larger and 1/10 (taper angle: 5.725°) or smaller, more preferably 1/80 (taper angle: 0.7162°) or larger and 1/20 (taper angle: 2.864°) or smaller, and still more preferably 1/60 (taper angle: 0.9548°) or larger and 1/35 (taper angle: 1.6366°) or smaller. Further the taper length L is made to be preferably 20 mm or longer and 100 mm or shorter, more preferably 20 mm or longer and 80 mm or shorter, and still more preferably 20 mm or longer and 60 mm or shorter.

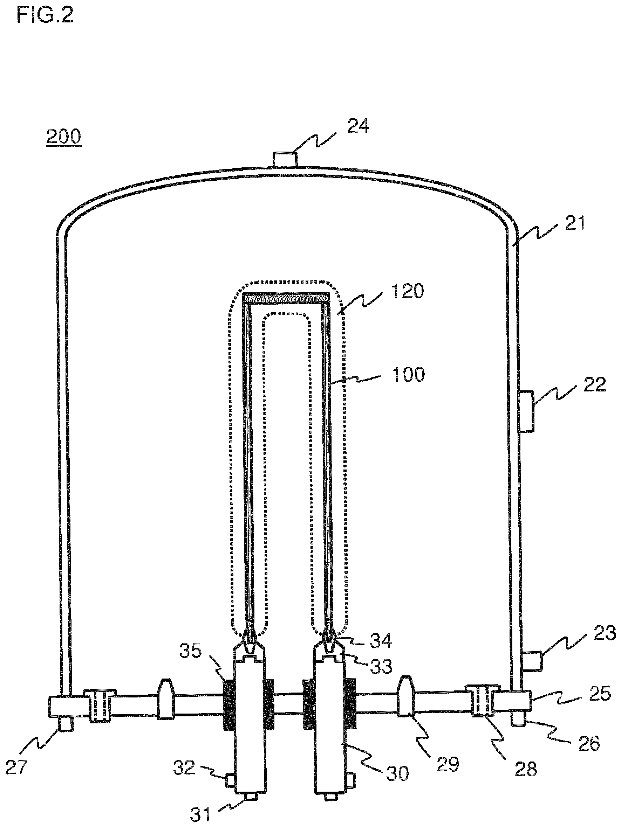

Figure 2 is a schematic explanatory view illustrating one example of a constitution of a reaction furnace 200 which is the production device of a polycrystalline silicon rod according to the present invention. The reaction furnace 200 illustrated in this figure is a device to obtain a polycrystalline silicon rod 120 by depositing a polycrystalline silicon on the surface of a silicon core wire 100 by a CVD reaction using Siemens process, and is constituted of a baseplate 25 and a belljar 21.

On the baseplate 25, there are disposed metal electrodes 30 to supply a current to the silicon core wire 100, gas nozzles 29 to supply process gases such as nitrogen gas, hydrogen gas and trichlorosilane gas, and exhaust outlets 28 to discharge exhaust gas. The baseplate 25 is provided further with an inlet part 26 and an outlet part 27 for a cooling medium to cool the baseplate itself.

The belljar 21 has an inlet part 23 and an outlet part 24 for a cooling medium to cool the belljar itself, and further has an observation port 22 for visually checking the interior from the outside.

The metal-made electrodes 30 are for energizing the silicon core wire 100, and each have an inlet 31 and an outlet 32 for a cooling medium to cool the metal electrode itself, and attached to the baseplate 25 through an insulating material 35; and the upper part of the metal electrode has a structure which can mount an adaptor (a supporting member of a core wire holder 34) 33 provided between the metal electrode 30 and the core wire holder (holding member) 34 to hold the end part 10 of the silicon core wire 100.

That is, the core wire holders 34 are each fixed to the upper part of the adaptor 33; the end parts 10 of the silicon core wire 100 are each fixed to the core wire holder 34; and the energization of the silicon core wire 100 from the metal-made electrodes 30 means to be carried out through the adaptors 33 and the core wire holders 34.

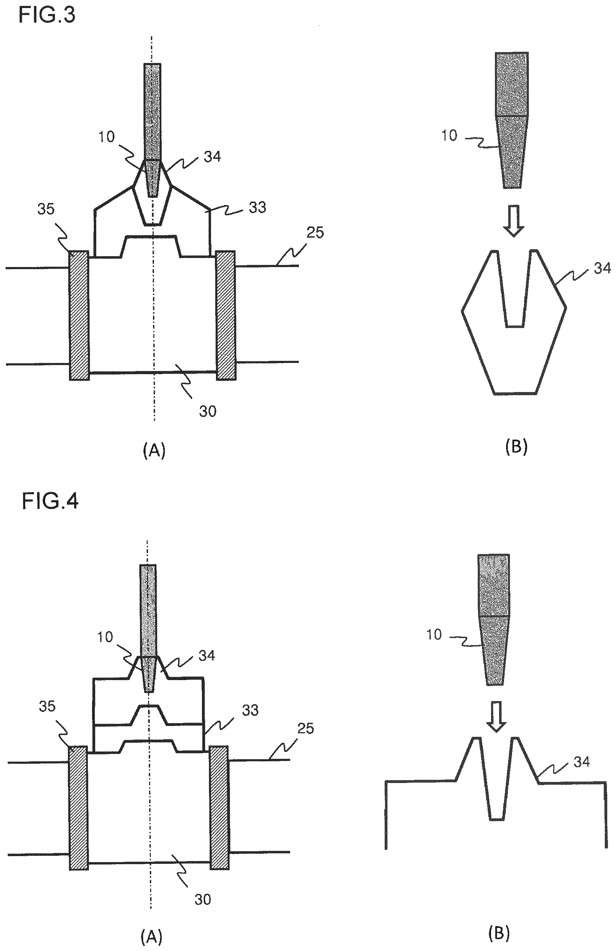

Figure 3(A) is a view of one form example of the core wire holder 34 to hold the silicon core wire 100, and the adaptor 33 to mount the core wire holder 34; and Figure 3(B) is a view illustrating a situation where the end part 10 of the silicon core wire 100 is about to be inserted in the core wire holder 34.

The core wire holder 34 being a holding member of the silicon core wire is provided with a hole into which the end part 10 of the silicon core wire is inserted; and the inner surface of the hole, when the opening side of the hole is set upward and the insertion direction of the end part 10 of the silicon core wire is set downward, has a taper of a positive taper angle.

The taper is made to be, in order to receive the above-mentioned end part 10 of the silicon core wire, as in the above, preferably 1/100 (taper angle: 0.5729°) or larger and 1/10 (taper angle: 5.725°) or smaller, more preferably 1/80 (taper angle: 0.7162°) or larger and 1/20 (taper angle: 2.864°) or smaller, and still more preferably 1/60 (taper angle: 0.9548°) or larger and 1/35 (taper angle: 1.6366°) or smaller.

The taper length is made to be, also as in the above, preferably 20 mm or longer and 100 mm or shorter, more preferably 20 mm or longer and 80 mm or shorter, and still more preferably 20 mm or longer and 60 mm or shorter.

In the form illustrated in this figure, the lower end part of the core wire holder 34 (holding member) has a taper of a positive taper angle. On the other hand, in the adaptor 33 (supporting member) to be used for connection of the metal electrode 30 with the core wire holder 34 (holding member) for energization of the silicon core wire 100, the inner surface of the hole into which the lower end part of the core wire holder 34 (holding member) is inserted, when the opening side of the hole is set upward and the insertion direction of the lower end part of the holding member is set downward, has a taper of a positive taper angle. The lower end part of the core wire holder 34 (holding member) is inserted in the hole of the adaptor 33 (supporting member) and the silicon core wire 100 is thus fixed.

These taper (taper angle) and taper length are established in ranges enough to firmly hold the core wire holder 34 to hold the silicon core wire.

Figure 4(A) is a view of another form example of a core wire holder 34 to hold the silicon core wire 100 and an adaptor 33 to mount the core wire holder 34; and Figure 4(B) is a view illustrating a situation where the end part 10 of the silicon core wire 100 is about to be inserted in the core wire holder 34.

Also in this form, the core wire holder 34 being a holding member of the silicon core wire is provided with a hole into which the end part 10 of the silicon core wire is inserted; and the inner surface of the hole, when the opening side of the hole is set upward and the insertion direction of the end part 10 of the silicon core wire is set downward, has a taper of a positive taper angle.

The taper is also made to be, in order to receive the above-mentioned end part 10 of the silicon core wire, as in the above, preferably 1/100 (taper angle: 0.5729°) or larger and 1/10 (taper angle: 5.725°) or smaller, more preferably 1/80 (taper angle: 0.7162°) or larger and 1/20 (taper angle: 2.864°) or smaller, and still more preferably 1/60 (taper angle: 0.9548°) or larger and 1/35 (taper angle: 1.6366°) or smaller.

The taper length is made to be, also as in the above, preferably 20 mm or longer and 100 mm or shorter, more preferably 20 mm or longer and 80 mm or shorter, and still more preferably 20 mm or longer and 60 mm or shorter.

In the form illustrated in Figure 4(A), the lower end part of the core wire holder 34 (holding member) is provided with a depressed part; and when the opening side of the depressed part is set downward, the inner surface thereof has a taper of a positive taper angle.

On the other hand, the upper part of the adaptor 33 (supporting member) to be used for connection of the metal electrode 30 with the core wire holder 34 (holding member) for energization of the silicon core wire 100 has a raised part to receive the depressed part of the core wire holder 34 (holding member); and the surface of the raised part has a taper of a positive taper angle. The depressed part of the lower end part of the core wire holder 34 (holding member) receives the raised part of the adaptor 33 (supporting member) and the silicon core wire 100 is thus fixed.

These taper (taper angle) and taper length are established in ranges enough to firmly hold the core wire holder 34 to hold the silicon core wire.

Thus, the device for producing a polycrystalline silicon rod according to the present invention is equipped with the holding member 34 of the silicon core wire 100 to become a seed in order to deposit a polycrystalline silicon by a CVD reaction, and the holding member 34 is characterized in that the inner surface of the hole into which the end part 10 of the silicon core wire 100 is inserted, when the opening side of the hole is set upward and the insertion direction of the end part of the silicon core wire 100 is set downward, has a taper of a positive taper angle.

Here, the holding member 34 and the supporting member 33 may be metallic, but at least one is preferably composed of a graphite.

### Examples

### [Example 1]

In the form illustrated in Figure 3, a silicon core wire 100 was set in a reaction furnace 200. The height (length) of the silicon core wire 100 was 1,850 mm; and the cross-section had a rectangle whose one side was 7 mm. The end part 10 of the silicon core wire 100 was provided with a tapered part whose taper was 1/50 (taper angle: 1.1459°) and taper length was 45 mm.

The cross-section of an opening part of a core wire holder 34 to accommodate the end part 10 of the silicon core wire 100 was made to be a rectangle; the opening part is processed into a taper shape whose taper was 1/50 (taper angle: 1.1459°) and taper length was 40 mm; and the silicon core wire 100 resulted in being held by its own weight.

After the interior of the reaction furnace 200 was replaced by hydrogen, a voltage of 2,000 V was applied to the silicon core wire 100, which was thus energized (ignited). Thereafter, a raw material gas in which trichlorosilane was diluted with hydrogen was supplied in the furnace; and the surface temperature of the silicon core wire 100 was held at 1,100°C to cause a polycrystalline silicon to deposit at a deposition rate of 13 µm/min to thereby produce a polycrystalline silicon rod 120 of 45 mm in diameter.

Ten batches of the polycrystalline silicon rod were produced under the above condition, and there were observed no local fusion of or structural damage to the silicon core wires due to generation of sparks and the like, and no falling nor failure of the silicon core wires 100.

### [Example 2]

The production of 10 batches of a polycrystalline silicon rod 120 of 45 mm in diameter was carried out under the same condition as in Example 1, except for causing polycrystalline silicons to deposit at a deposition rate of 15 µm/min, and there were observed no local fusion of or structural damage to the silicon core wires due to generation of sparks and the like, and no falling nor failure of the silicon core wires 100.

### [Comparative Example 1]

An employed silicon core wire had a height (length) of 1,850 mm, and a cross-section of a rectangle whose one side was 7 mm. The silicon core wire was provided with no tapered part on its end part as conventionally. The end part of the silicon core wire was inserted in an opening part of a core wire holder, and fixed by lateral screwing. Here, the opening part of the core wire holder having a square cross-section was, as in Example 1, processed into a taper shape whose taper was 1/50 (taper angle: 1.1459°) and taper length was 40 mm.

After the interior of the reaction furnace 200 was replaced by hydrogen, a voltage of 2,000 V was applied to the silicon core wire, which was thus energized (ignited). Thereafter, a raw material gas in which trichlorosilane was diluted with hydrogen was supplied in the furnace; and the surface temperature of the silicon core wire was held at 1,100°C to cause a polycrystalline silicon to deposit at a deposition rate of 13 µm/min to thereby produce a polycrystalline silicon rod of 45 mm in diameter.

When the production of a plurality of batches of the polycrystalline silicon rod was carried out under the above condition, falling of the silicon core wire was caused at the fifth batch due to local fusion of the silicon core wire by generation of sparks.

### [Comparative Example 2]

When the production of a plurality of batches of a polycrystalline silicon rod of 45 mm in diameter was carried out under the same condition as in Comparative Example 1, except for causing polycrystalline silicons to deposit at a deposition rate of 15 µm/min, falling of the silicon core wire was caused at the eighth batch due to local fusion of the silicon core wire by generation of sparks.

### [Example 3]

In the form illustrated in Figure 3, a silicon core wire 100 was set in a reaction furnace 200. The height (length) of the silicon core wire 100 was 2,000 mm; and the cross-section had a rectangle whose one side was 7 mm. The end part 10 of the silicon core wire 100 was provided with a tapered part whose taper was 1/50 (taper angle: 1.1459°) and taper length was 45 mm.

The cross-section of an opening part of a core wire holder 34 to accommodate the end part 10 of the silicon core wire 100 was made to be a rectangle; the opening part is processed into a taper shape whose taper was 1/50 (taper angle: 1.1459°) and taper length was 45 mm; and the silicon core wire 100 resulted in being held by its own weight.

After the interior of the reaction furnace 200 was replaced by hydrogen, a voltage of 2,000 V was applied to the silicon core wire 100, which was thus energized (ignited). Thereafter, a raw material gas in which trichlorosilane was diluted with hydrogen was supplied in the furnace; and the surface temperature of the silicon core wire 100 was held at 1,100°C to cause a polycrystalline silicon to deposit at a deposition rate of 15 µm/min until its diameter became 45 mm and at a deposition rate maintained at 14 µm/min thereafter to thereby produce a polycrystalline silicon rod 120 of 145 mm in diameter.

Ten batches of the polycrystalline silicon rod were produced under the above condition, and there were observed no local fusion of or structural damage to the silicon core wires due to generation of sparks and the like, and no falling nor failure of the silicon core wires 100.

### [Example 4]

The production of 10 batches of a polycrystalline silicon rod 120 of 145 mm in diameter was carried out under the same condition as in Example 3, except for making the taper of the tapered part of the silicon core wire 100 to be 1/35 (taper angle: 1.6366°), and there were observed no local fusion of or structural damage to the silicon core wires due to generation of sparks and the like, and no falling nor failure of the silicon core wires 100.

As described above, in the present invention, the design is so made that contact portions of the silicon core wire and the holding member to hold the end part of the silicon core wire have tapers. In such an accommodation state, the holding results in being carried out not by fixation by an external force with a screw or the like but by the own weight of the silicon core wire. Consequently, even in the case where the difference in specific resistance between materials of the silicon core wire and the holding member is large, the substantial contact resistance difference becomes low, and generation of sparks and the like when the polycrystalline silicon is deposited is suppressed and falling and failure of the silicon core wire is prevented.

### Industrial Applicability

The present invention provides a technology of contributing to the stable production of a polycrystalline silicon by preventing local fusion of and structural damage to a silicon core wire due to generation of sparks and the like, particularly preventing falling and failure of the silicon core wire in the early stage of the deposition reaction, when the polycrystalline silicon is deposited on the silicon core wire by a CVD method.

### Reference Signs List

- 10: END PART
- 21: BELLJAR
- 22: OBSERVATION PORT
- 23, 26, 31: INLET PART OF COOLING MEDIUM
- 24, 27, 32: OUTLET PART OF COOLING MEDIUM
- 25: BASEPLATE
- 28: EXHAUST PORT
- 29: GAS NOZZLE
- 30: METAL ELECTRODE
- 33: ADAPTOR (SUPPORTING MEMBER)
- 34: CORE WIRE HOLDER (HOLDING MEMBER)
- 35: INSULATING MATERIAL
- 100: SILICON CORE WIRE
- 120: POLYCRYSTALLINE SILICON ROD
- 200: REACTION FURNACE

## Claims

1. A silicon core wire for producing a polycrystalline silicon rod, the silicon core wire becoming a seed for depositing a polycrystalline silicon by a CVD reaction, wherein the silicon core wire has a tapered part having a positive taper angle on an end part thereof to be inserted in a holding member provided in a reaction furnace.

2. The silicon core wire according to claim 1, wherein the tapered part has a taper of 1/100 (taper angle: 0.5729°) or larger and 1/10 (taper angle: 5.725°) or smaller.

3. The silicon core wire according to claim 1 or 2, wherein the tapered part has a taper length of 20 mm or longer and 100 mm or shorter.

4. A device for producing a polycrystalline silicon rod, comprising:
a holding member of a silicon core wire to become a seed for depositing a polycrystalline silicon by a CVD reaction,
wherein the holding member has a hole for inserting an end part of the silicon core wire thereinto, and an inner surface of the hole, when the opening side of the hole is set upward and the insertion direction of the end part of the silicon core wire is set downward, has a taper of a positive taper angle.

5. The device for producing a polycrystalline silicon rod according to claim 4, wherein the tapered part has a taper of 1/100 (taper angle: 0.5729°) or larger and 1/10 (taper angle: 5.725°) or smaller.

6. The device for producing a polycrystalline silicon rod according to claim 4 or 5, wherein the tapered part has a taper length of 20 mm or longer and 100 mm or shorter.

7. The device for producing a polycrystalline silicon rod according to claim 4, comprising:
a metal electrode for energizing the silicon core wire; and a supporting member to be used for connection of the metal electrode with the holding member, wherein:
the holding member has a taper of a positive taper angle on a lower end part thereof; and
the supporting member has a hole for inserting the lower end part of the holding member thereinto, and an inner surface of the hole, when the opening side of the hole is set upward and the insertion direction of the lower end part of the holding member is set downward, has a taper of a positive taper angle.

8. The device for producing a polycrystalline silicon rod according to claim 4, comprising: a metal electrode for energizing the silicon core wire and a supporting member to be used for connection of the metal electrode with the holding member, wherein:
the holding member has a depressed part on a lower end part thereof, and an inner surface of the depressed part, when the opening side of the depressed part is set downward, has a taper of a positive taper angle; and
the supporting member has a raised part to receive the depressed part of the holding member, and a surface of the raised part has a taper of a positive taper angle.

9. The device for producing a polycrystalline silicon rod according to any one of claims 4, 5, 7 and 8, wherein at least one of the holding member and the supporting member comprises a graphite.
